# EUROPEAN PATENT APPLICATION

(11) **EP 4 752 052 A1**
(43) Date of publication of application: **03.06.2026**
(21) Application number: 25218726.5
(22) Date of filing: 26.11.2025
(51) Int. Cl.: B64C 25/14, B64C 25/22, B64C 25/34

(54) **AIRCRAFT LANDING GEAR ASSEMBLY**

(30) Priority: 28.11.2024 GB 202417507
(71) Applicant: Airbus Operations Limited, Bristol BS34 7PA (GB)
(72) Inventor: HANCOCK, Nicholas, Bristol, BS34 7PA (GB); BISHOP, Benjamin, Bristol, BS34 7PA (GB)
(74) Representative: Mathys & Squire

(57) **Abstract**

A landing gear assembly (30) for an aircraft (10), the landing gear assembly comprising: a forward brace (40) having a first end (41) for attachment to an airframe of the aircraft, and a second end (43); an aft brace (50) having a first end (51) for attachment to the airframe of the aircraft, and a second end (53), wherein the second end (53) of the aft brace is coupled to the second end (43) of the forward brace; an actuator piston (70) having a first end (71) and a second end, wherein the first end (71) of the actuator piston is pivotally coupled to the first end (41) of the forward brace; a bellcrank linkage (60) having a first end (62), a second end (64), and a pivot point (63) between the first end and the second end, such that a first portion of the bellcrank linkage extends from the first end (62) to the pivot point (63), and a second portion of the bellcrank linkage extends from the pivot point (63) to the second end (64), wherein the pivot point of the bellcrank linkage is pivotally coupled to the first end (51) of the aft brace, and wherein the first end (62) of the bellcrank linkage is pivotally coupled to the second end of the actuator piston (70); a primary strut (90) having a first end (91) and a second end (96), wherein the first end of the primary strut is pivotally coupled to the second end (43) of the forward brace (40) and the second end (53) of the aft brace (50), and wherein one or more wheels (100) of the aircraft are mounted at the second end (96) of the primary strut (90); and a secondary strut (80, e.g. a shock absorber) having a first end (81) and a second end (83), wherein the first end of the secondary strut is pivotally coupled to the second end (64) of the bellcrank linkage (60), and wherein the second end (83) of the secondary strut (80) is pivotally coupled to a pivot point near to the second end (96) of the primary strut (90); wherein the landing gear assembly is configured to adopt a deployed configuration when the actuator piston (70) is in a retracted configuration, and wherein the landing gear assembly is configured to adopt a retracted configuration when the actuator piston (70) is in an extended configuration. Also provided is an aircraft (such as a blended wing body aircraft BWB) having such a landing gear assembly.

## Description

### FIELD OF THE INVENTION

This invention relates to a landing gear assembly for an aircraft. The invention is particularly suitable, but by no means limited, for use with a blended wing body (BWB) aircraft.

### BACKGROUND TO THE INVENTION

The landing gear of a commercial passenger aircraft typically includes a main landing gear assembly beneath each wing of the aircraft, and/or beneath the fuselage of the aircraft. The landing gear also typically includes a smaller landing gear assembly, beneath or near to the aircraft's nose (also known as the "nose gear"). Usually, each landing gear assembly is retractable into a respective landing gear bay (or simply "gear bay") within the wings or fuselage of the aircraft during flight, in order to reduce drag, and is extendable from the gear bay, into a deployed configuration, for taxiing, take-off and landing operations, or for when the aircraft is parked.

In certain passenger aircraft, the main landing gear assemblies and/or the nose gear may be configured to retract aftwards into a respective gear bay, and the present work particularly relates to such aftwardly-retractable landing gear assemblies.

Blended wing body (BWB) aircraft have wing and body structures that are smoothly blended together, thereby reducing drag compared to aircraft having a conventional wing-body junction. The body of a BWB aircraft may also be shaped to provide lift (as well as providing space for passengers and/or cargo), thereby enabling the size and drag of the wings to be reduced.

With passenger aircraft in general, and BWB aircraft in particular, the space available for each gear bay is limited. It is desirable for each gear bay to be as compact as possible, to maximise the space available in the fuselage, wings or body of the aircraft for the carriage of passengers, cargo or fuel. This is especially (but not exclusively) an issue in BWB aircraft, as a consequence of the tapered profile of the aircraft's body and wings. In particular, the space available for the main landing gear bay of a BWB aircraft may be especially limited due to the tapering of the fuselage at the aft section of the aircraft, where the main landing gear is typically located. There is therefore a particular desire for the main landing gear bay of a BWB aircraft to be as compact as possible.

There is also a desire for the opening of a gear bay in an aircraft wing or body structure (through which opening the respective landing gear passes when transitioning from a retracted to deployed configuration, or vice versa), to be as short as possible, to maintain the mechanical properties and structural integrity of the aircraft wing or body structure in which the opening is formed.

In view of the above, there is a desire for landing gear assemblies (particularly, but not exclusively, the main landing gear assembly of a BWB aircraft) to be retractable into a short, compact configuration, to enable the respective gear bay to be as compact as possible, and to enable the gear bay opening in the wing or body structure of the aircraft to be as short as possible.

A further desire in respect of aircraft landing gear assemblies is to reduce the number of interfaces (i.e. mechanical attachment points) between the landing gear assembly and the airframe of the aircraft, so as to make the landing gear assembly quicker and easier to install (and remove/replace), and also to simplify the administrative process associated with commissioning each interface.

### SUMMARY OF THE INVENTION

Aspects and embodiments of the present invention are set out in the appended claims.

According to a first aspect of the present invention there is provided a landing gear assembly for an aircraft, the landing gear assembly comprising: a forward brace having a first end for attachment to (i.e. interfacing with) an airframe of the aircraft, and a second end; an aft brace having a first end for attachment to (i.e. interfacing with) the airframe of the aircraft, and a second end, wherein the second end of the aft brace is coupled to the second end of the forward brace; an actuator piston having a first end and a second end, wherein the first end of the actuator piston is pivotally coupled to the first end of the forward brace; a bellcrank linkage having a first end, a second end, and a pivot point between the first end and the second end, such that a first portion of the bellcrank linkage extends from the first end to the pivot point, and a second portion of the bellcrank linkage extends from the pivot point to the second end, wherein the pivot point of the bellcrank linkage is pivotally coupled to the first end of the aft brace, and wherein the first end of the bellcrank linkage is pivotally coupled to the second end of the actuator piston; a primary strut having a first end and a second end, wherein the first end of the primary strut is pivotally coupled to the second end of the forward brace and the second end of the aft brace, and wherein one or more wheels of the aircraft are mounted at the second end of the primary strut; and a secondary strut (e.g. a shock absorber) having a first end and a second end, wherein the first end of the secondary strut is pivotally coupled to the second end of the bellcrank linkage, and wherein the second end of the secondary strut is pivotally coupled to a pivot point near to the second end of the primary strut; wherein the landing gear assembly is configured to adopt a deployed configuration when the actuator piston is in a retracted configuration, and wherein the landing gear assembly is configured to adopt a retracted configuration when the actuator piston is in an extended configuration.

Such a configuration enables the landing gear assembly to be retractable into a short, compact configuration, to enable the respective gear bay to be as compact as possible, and to enable the gear bay opening in the wing or body structure of the aircraft to be as short as possible. Moreover, only two interface points are required between the landing gear assembly and the airframe of the aircraft, thereby making the landing gear assembly relatively quick and straightforward to install (and remove/replace), and also simplifying the administrative process associated with commissioning each interface.

The aircraft may be a commercial passenger aircraft, for example an aircraft capable of transporting more than 50 passengers, for example more than 100 passengers. For the purposes of this application the term "commercial passenger aircraft" is also taken to include aircraft of the same type configured for cargo transport.

Optionally the first end of the actuator piston is pivotally mounted about a common axis with the first end of the forward brace.

Optionally the pivot point of the bellcrank linkage is pivotally mounted about a common axis with the first end of the aft brace.

Optionally the first end of the primary strut is pivotally mounted about a common axis with the second end of the forward brace and the second end of the aft brace.

Preferably the second portion of the bellcrank linkage is at an obtuse angle relative to the first portion of the bellcrank linkage. For example, the obtuse angle may be approximately 140°.

Preferably the second portion of the bellcrank linkage is longer than the first portion of the bellcrank linkage. For example, the second portion of the bellcrank linkage may be approximately twice the length of the first portion of the bellcrank linkage.

Optionally the second end of the bellcrank linkage is in the form of a clevis in which the first end of the secondary strut is pivotally coupled.

Optionally the forward brace comprises a first forward bracing strut and a second forward bracing strut, each having a first end and a second end, wherein the first end of the first forward bracing strut and the first end of the second forward bracing strut form the first end of the forward brace, and wherein the second end of the first forward bracing strut and the second end of the second forward bracing strut form the second end of the forward brace.

Optionally the aft brace comprises a first aft bracing strut and a second aft bracing strut, each having a first end and a second end, wherein the first end of the first aft bracing strut and the first end of the second aft bracing strut form the first end of the aft brace, and wherein the second end of the first aft bracing strut and the second end of the second aft bracing strut form the second end of the aft brace.

Preferably the landing gear assembly further comprises a first lock link and a second lock link, each having a first end and a second end, wherein the first end of the first lock link is pivotally coupled to the second end of the forward brace, the second end of the aft brace, and the first end of the primary strut; wherein the second end of the first lock link is pivotally coupled to the first end of the second lock link; wherein the second end of the second lock link is pivotally coupled to the second end of the bellcrank linkage and the first end of the secondary strut; and wherein the first and second lock links are configured to adopt a bracing configuration when the landing gear assembly is in the deployed configuration.

Optionally the first lock link is longer than the second lock link. For example the length of the first lock link may be around two to three times the length of the second lock link.

Optionally the first end of the first lock link is pivotally mounted about the common axis with the first end of the primary strut, the second end of the forward brace and the second end of the aft brace.

Optionally the first and second lock links are further configured to adopt a locked configuration when the landing gear assembly is in the retracted configuration (i.e. acting as a so-called "reinstating link").

Preferably the secondary strut comprises a shock absorber.

Optionally the shock absorber is configured to adopt an extended configuration in the event it loses oil or pressure.

Optionally the second end of the secondary strut is pivotally coupled to the pivot point near to the second end of the primary strut by means of a fuse pin.

Preferably, when transitioning from the deployed configuration to the retracted configuration, the second end of the bellcrank linkage is configured to pass into a region between the forward brace and the aft brace, thereby bringing the first end of the secondary strut into the region between the forward brace and the aft brace and achieving, resulting in a compact retracted configuration.

Optionally, when transitioning from the deployed configuration to the retracted configuration, or vice versa, the first end of the bellcrank linkage is configured to rotate about the pivot point of the bellcrank linkage in an over-centred manner.

The landing gear assembly may be a main landing gear assembly. Alternatively, it may be a nose gear, for example.

According to a second aspect of the invention there is provided an aircraft comprising: the landing gear assembly according to the first aspect; and a landing gear bay; wherein the landing gear assembly is retractable into the landing gear bay when transitioning from the deployed configuration to the retracted configuration.

The aircraft may be a blended wing body (BWB) aircraft. Alternatively, however, it may be another type of aircraft. The landing gear bay may be behind a passenger area of the aircraft.

### BRIEF DESCRIPTION OF THE DRAWINGS

Embodiments of the invention will now be described, by way of example only, and with reference to the drawings in which:
Figure 1 is a schematic side view of a BWB aircraft;
Figure 2 is a perspective view of an example of a landing gear assembly in a deployed configuration;
Figure 3 is a side view of the landing gear assembly of Figure 2 in the deployed configuration, and also depicting part of the underside of the wing or body of the aircraft through which the landing gear assembly extends;
Figure 4 is a perspective view of the landing gear assembly of Figure 2 in a retracted configuration;
Figure 5 is a side view of the landing gear assembly of Figure 2 in the retracted configuration, also depicting part of the underside of the wing or body of the aircraft, and the walls of the gear bay into which the landing gear assembly is retracted; and
Figures 6a to 6e are side views and Figures 7a to 7e are corresponding perspective views of the landing gear assembly of Figure 2 transitioning from the deployed configuration to the retracted configuration.

In the figures, like elements are indicated by like reference numerals throughout.

### DETAILED DESCRIPTION OF PREFERRED EMBODIMENTS

The present embodiments represent the best ways known to the Applicant of putting the invention into practice. However, they are not the only ways in which this can be achieved.

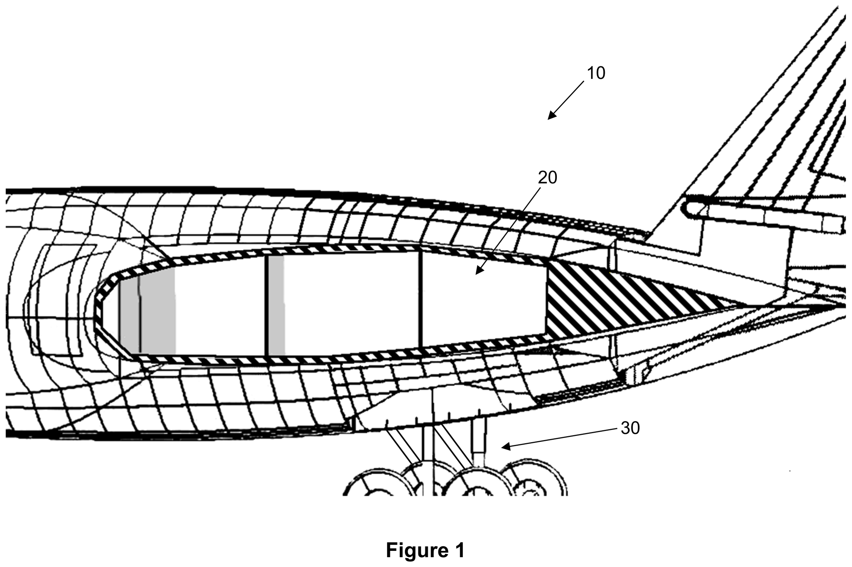

Figure 1 shows an example of a blended wing body (BWB) aircraft 10, facing towards the left of the figure. However, it should be noted that the teachings of the present disclosure are not limited to BWB aircraft, and those skilled in the art will appreciate that they may alternatively be applied to other aircraft types.

The illustrated BWB aircraft 10 comprises a blended wing/body structure 20 and a landing gear assembly 30 extending beneath the wing/body structure 20. The blended wing/body structure 20 acts as both a wing structure, to provide lift, and a body structure in which passengers (or cargo) can be carried. In the illustrated example the landing gear assembly 30 is a main landing gear assembly, although the teachings of the present disclosure are not limited to main landing gear assemblies, and may alternatively be applied to nose gear assemblies, for example. The landing gear assembly 30 is aftwardly retractable into, and forwardly deployable from, a corresponding landing gear bay, within the wing/body structure 20.

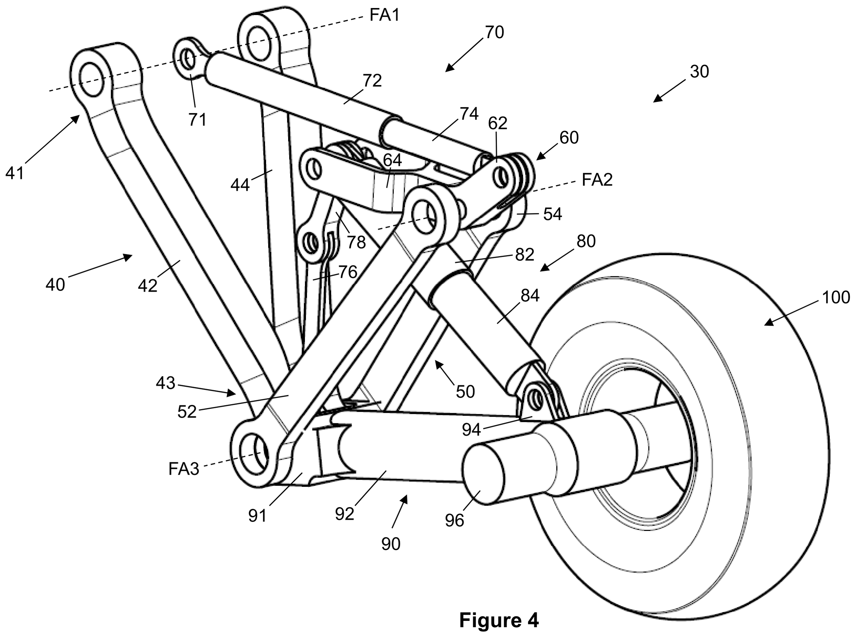

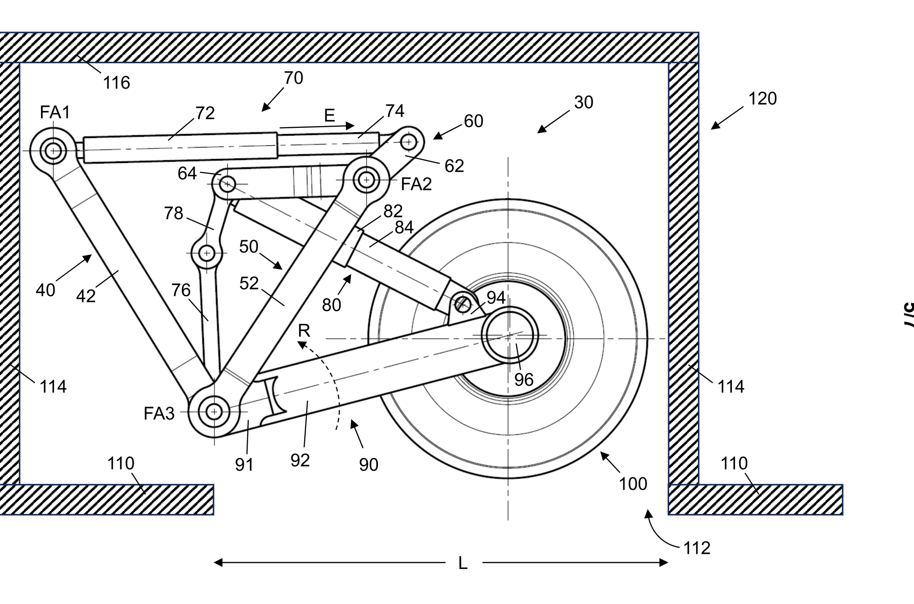

In use, the landing gear assembly 30 is brought (by the operation of one or more actuators) into a deployed configuration, as shown in Figures 1, 2 and 3, for when the aircraft is performing taxiing, take-off and landing operations, or is parked. From the deployed configuration, the landing gear assembly 30 may be brought (again by the operation of one or more actuators) into a retracted or folded configuration, as shown in Figures 4 and 5, during flight.

### Overview of landing gear assembly 30

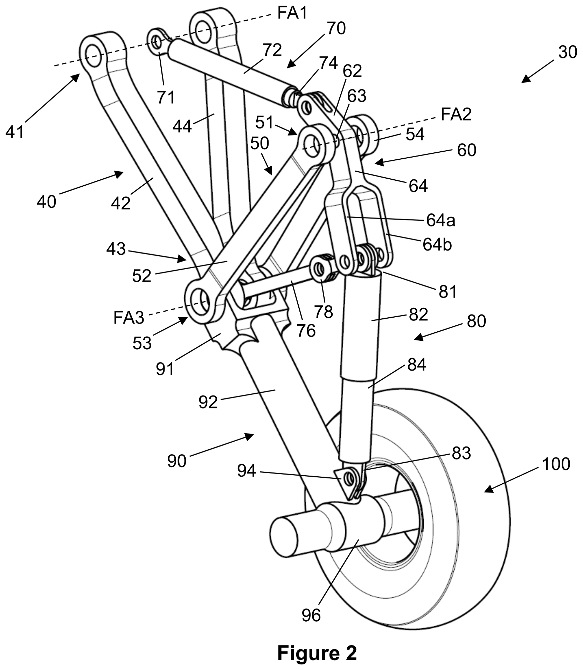

Turning now to Figures 2 to 5, this shows in detail an example landing gear assembly 30 in accordance with the present disclosure. One or more wheels 100 of the aircraft are mounted on the landing gear assembly 30, on respective axle(s). In the illustrated example a single wheel 100 is shown (primarily to facilitate understanding of the present disclosure), although in other examples two or more wheels may be provided. For example, four or six wheels, or more, may be provided on a multiple-axle bogie mounted at the bottom of the landing gear assembly 30.

The landing gear assembly 30 comprises a forward brace 40, an aft brace 50, an actuator piston 70, a bellcrank linkage 60, a primary strut 92 on which the wheel(s) 100 is mounted, and a secondary strut 80.

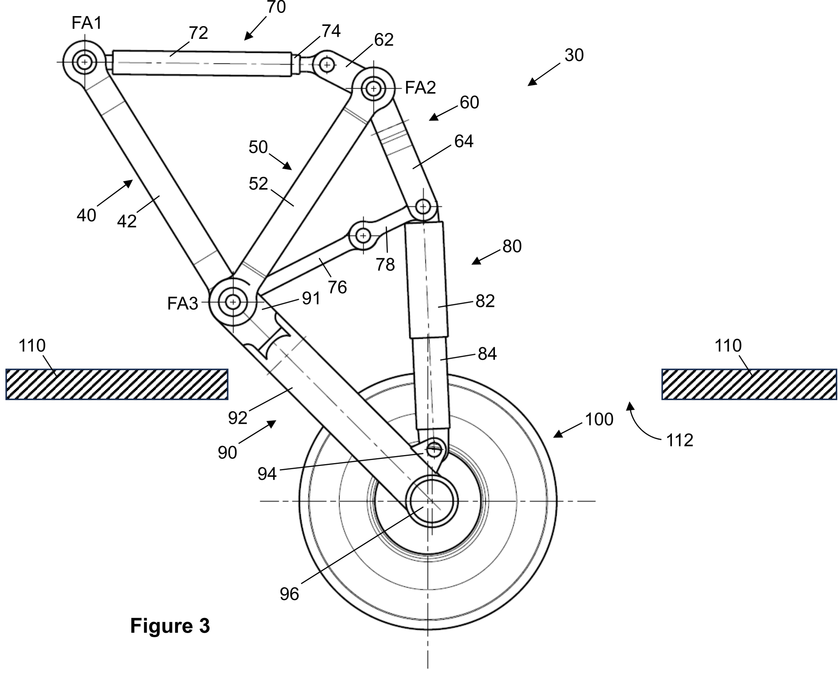

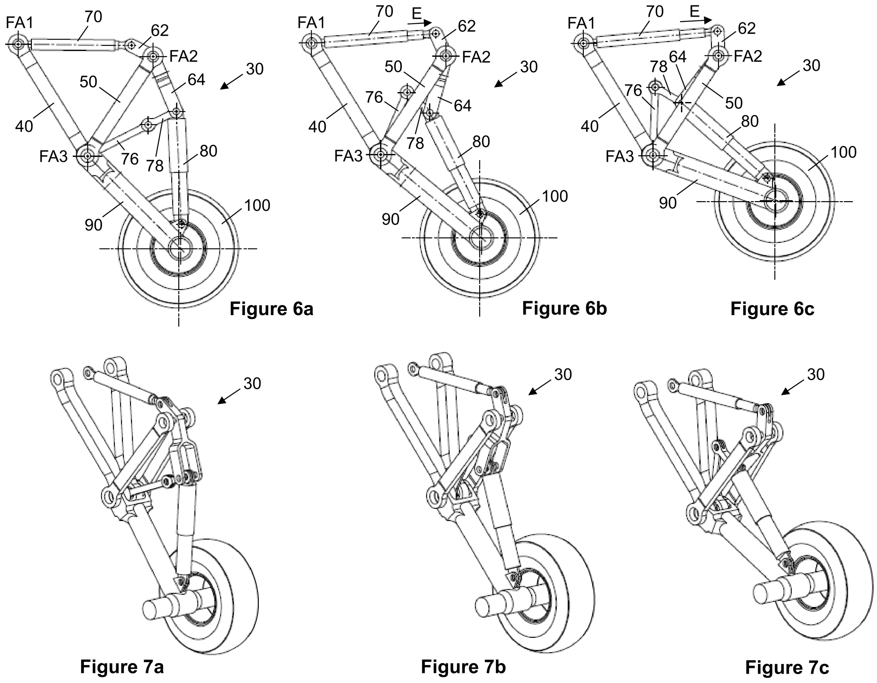

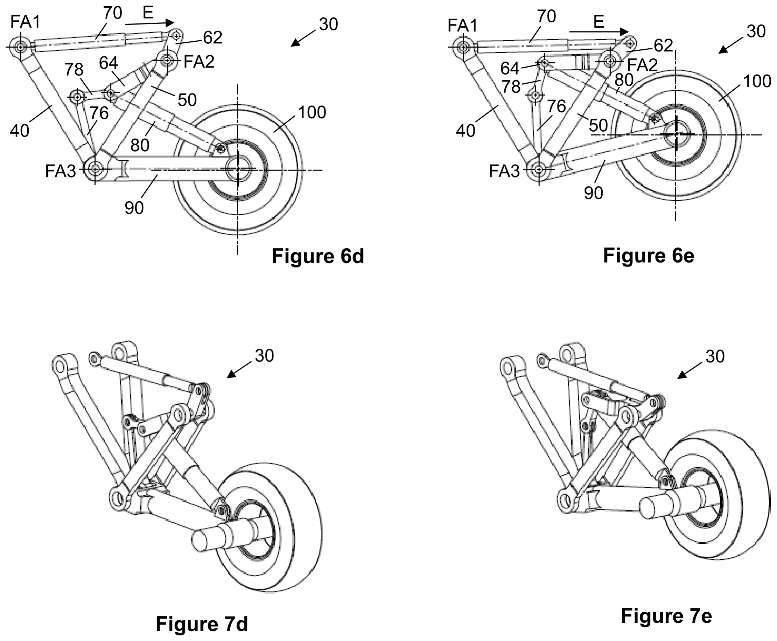

The actuator piston 70 is typically a hydraulic or electrohydraulic piston, and is drivable between a retracted configuration (as shown in Figures 2 and 3) and an extended configuration (as shown in Figures 4 and 5). The landing gear assembly 30 adopts a deployed configuration when the actuator piston 70 is in the retracted configuration, as shown in Figures 2 and 3. Conversely, the landing gear assembly 30 adopts a retracted configuration when the actuator piston 70 is in the extended configuration, as shown in Figures 4 and 5. As shown in Figures 6a-6e and 7a-7e, the landing gear assembly 30 transitions from the deployed configuration to the retracted configuration as the actuator piston 70 is progressively extended (as indicated by arrow E in Figures 5 and 6b-6e). In a reverse manner, the landing gear assembly 30 may be transitioned from the retracted configuration to the deployed configuration by progressively retracting the actuator piston 70.

Optionally, as in the illustrated example, the landing gear assembly 30 may also include a first lock link 76 and a second lock link 78 configured to adopt a bracing configuration when the landing gear assembly 30 is in the deployed configuration.

It will be appreciated that the couplings (e.g. pins and/or linkage bolts) that couple the various struts and linkages together (in many cases in a pivotal manner), and that attach the landing gear assembly 30 to the airframe of the aircraft, have been omitted from the drawings in order to enable the configuration and interoperation of the various struts and linkages to be more clearly understood. Those skilled in the art will readily understand how the struts and linkages may be coupled together, and this need not be described further herein. It will also be appreciated that other components (such as brake components) that may be associated with the landing gear assembly 30 have also been omitted from the drawings, again for the sake of clarity and ease of understanding, and will also not be described further herein.

### Forward brace 40

The forward brace 40 has a first end 41 for fixedly attaching to (i.e. interfacing with) the airframe of the aircraft at a fixed point. This fixed point defines the first of two (and only two) interface points of the present landing gear assembly 30. In the illustrated example, this fixed point coincides with the fixed axis FA1 about which the first end of the actuator piston 70 is pivotally mounted, as discussed further below. The forward brace 40 also has a second end 43 to which the aft brace 50 is fixedly coupled.

In the illustrated example, the forward brace 40 comprises a first forward bracing strut 42 and a second forward bracing strut 44, each having a first end and a second end. The first end of the first forward bracing strut 42 and the first end of the second forward bracing strut 44 form the first end 41 of the forward brace 40. The second end of the first forward bracing strut 42 and the second end of the second forward bracing strut 44 form the second end 43 of the forward brace 40, to which the aft brace 50 is fixedly coupled.

The first and second forward bracing struts 42, 44 are spaced apart from one another at the first end 41, to enhance the strength and rigidity of the landing gear assembly 30. Further, the first and second forward bracing struts 42, 44 each incorporate an angled central portion that causes them to come closer together as they extend from the first end 41 to the second end 43.

### Aft brace 50

The aft brace has a first end 51 for fixedly attaching to (i.e. interfacing with) the airframe of the aircraft at a fixed point. This fixed point defines the second of the two interface points of the landing gear assembly 30. In the illustrated example, this fixed point coincides with the fixed axis FA2 about which the bellcrank linkage 60 is pivotally mounted, as discussed further below. The aft brace 50 also has a second end 53 to which the second end 43 of the forward brace 40 is fixedly coupled. Such fixed coupling may be direct coupling, as illustrated, with the second end 53 of the aft brace 50 coupling directly to the second end 43 of the forward brace 40 (at FA3). Alternatively, however, the coupling between the second end 53 of the aft brace 50 and the second end 43 of the forward brace 40 may be indirect. For example, one or more fixed connecting members may be provided between the second end 53 of the aft brace 50 and the second end 43 of the forward brace 40.

In the illustrated example, the aft brace 50 comprises a first aft bracing strut 52 and a second aft bracing strut 54, each having a first end and a second end. The first end of the first aft bracing strut 52 and the first end of the second aft bracing strut 54 form the first end 51 of the aft brace 50. The second end of the first aft bracing strut 52 and the second end of the second aft bracing strut 54 form the second end 53 of the aft brace 50, to which the second end 43 of the forward brace 40 is fixedly coupled.

Together, the forward brace 40 and the aft brace 50 form a robust V-shaped structure, which helps to protect the interior of the aircraft (e.g. the passenger cabin) in the event of a crash landing.

### Actuator piston 70

The actuator piston 70 comprises a first end 71, a piston cylinder 72, and a piston rod 74 terminating in a second end. The piston rod 74 is controllably extendable from, and retractable into, the piston cylinder 72. The first end 71 incorporates a pivotable anchor and is fixed to the cylinder 72. The second end, at the end of the piston rod 74, also incorporates a pivotable anchor.

The first end 71 of the actuator piston 70 is pivotally coupled to the first end 41 of the forward brace 40, between the first forward bracing strut 42 and the second forward bracing strut 44. Such pivotal coupling may be direct coupling, as illustrated, with the first end 71 of the actuator piston 70 being pivotally mounted about a common fixed axis, FA1, with the first end 41 of the forward brace 40.

Alternatively, however, the pivotal coupling of the first end 71 of the actuator piston 70 may be indirect. For example, one or more fixed connecting members may be provided between the first end 41 of the forward brace 40 and the pivotal first end 71 of the actuator piston 70.

### Bellcrank linkage 60

The bellcrank linkage 60 comprises a first end 62, a second end 64, and a pivot point 63 between the first end 62 and the second end 64. Accordingly, a first portion of the bellcrank linkage 60 extends from the first end 62 to the pivot point 63, and a second portion of the bellcrank linkage 60 extends from the pivot point 63 to the second end 64.

The second portion of the bellcrank linkage 60 is at an obtuse angle relative to the first portion of the bellcrank linkage 60. In other words, virtual lines plotted from the pivot point 63 to the first end 62, and from the pivot point 63 to the second end 64, would be at an obtuse angle to one another. In the illustrated example, the obtuse angle between the first portion and the second portion of the bellcrank linkage 60 is approximately 140°.

The pivot point 63 of the bellcrank linkage 60 is pivotally coupled to the first end 51 of the aft brace 50, at a fixed position. Such pivotal coupling may be direct coupling, as illustrated, with the pivot point 63 of the bellcrank linkage being pivotally mounted about a common fixed axis FA2 with the first end 51 of the aft brace 50. However, in alternative examples one or more fixed connecting members may be provided between the pivot point 63 of the bellcrank linkage 60 and the first end 51 of the aft brace 50.

It may be noted that, when the landing gear assembly 30 is viewed from the side in its deployed configuration, as in Figure 3, the obtuse angle of the bellcrank linkage 60 is on the inside of the landing gear assembly 30, with the first and second ends 62, 64 extending either side of the aft brace 50.

The first end 62 of the bellcrank linkage 60 is pivotally coupled to the second end of the actuator piston 70. Accordingly, extension or retraction of the actuator piston 70 causes the bellcrank linkage 60 to rotate about its pivot point 63.

The second end 64 of the bellcrank linkage 60 is pivotally coupled to a first end 81 of the secondary strut 80, as discussed in greater detail below. In the illustrated example, the coupling between the second end 64 of the bellcrank linkage 60 and the first end 81 of the secondary strut 80 is achieved by the second end 64 of the bellcrank linkage 60 being in the form of a clevis, having bifurcated parallel parts 64a, 64b between which the first end 81 of the secondary strut 80 is pivotally coupled.

In the illustrated example, the first and second portions of the bellcrank linkage 60 are of unequal length. More particularly, the second portion of the bellcrank linkage 60 (from the pivot point 63 to the coupling point at the second end 64) is longer than the first portion of the bellcrank linkage 60 (from the pivot point 63 to the coupling point at the first end 62). Specifically, in the illustrated example, the second portion is approximately twice the length of the first portion. This amplifies the sweep of the second end 64 as the first end 62 is moved about the pivot point 63 by the actuator piston 70.

### Primary strut 90

The primary strut 90 comprises a main central shaft portion 92 (of relatively large diameter) having a first end 91 and a second end 96. One or more wheels 100 of the aircraft are mounted at the second end 96 of the primary strut 90, on an axle or by means of a bogie. The first end 91 of the primary strut 90 is pivotally coupled to the second end 43 of the forward brace 40 and the second end 53 of the aft brace 50. Such pivotal coupling may be direct coupling, as illustrated, with the first end 91 of the primary strut 90 being pivotally mounted about a common fixed axis, FA3, with the second end 43 of the forward brace 40 and the second end 53 of the aft brace 50. Alternatively, however, the pivotal coupling may be indirect. For example, one or more fixed connecting members may be provided between the second end 43 of the forward brace 40 or the second end 53 of the aft brace 50, and the pivotal first end 91 of the primary strut 90.

### Secondary strut 80

The secondary strut 80 comprises a first end 81 and a second end 83. The first end 81 of the secondary strut 80 is pivotally coupled to the second end 64 (clevis parts 64a and 64b) of the bellcrank linkage 60. The second end 83 of the secondary strut 80 is pivotally coupled to a pivot point 94 near to the second end 96 of the primary strut 90.

Preferably the secondary strut 80 is a shock absorber or so-called "oleo" strut, to cushion the impact of the aircraft landing. The shock absorber 80 comprises a cylinder 82, and a strut piston 84 which is axially moveable (inwards and outwards) within the cylinder 82. The first end 81 of the secondary strut 80 comprises a pivotable anchor point attached to the end of the cylinder 82, that is pivotally coupled to the second end 64 of the bellcrank linkage 60 (between clevis parts 64a and 64b). Another pivotable anchor point is provided at the end of the strut piston 84, that is pivotally coupled to the pivot point 94 on the primary strut 90.

The shock absorber 80 may be a modular shock absorber or oleo strut, that can be readily replaced in the event of a fault developing. This may be done by jacking the aircraft at the axis FA3, for example, to take the weight of the aircraft off the wheel 100 and enable the shock absorber 80 to be removed and replaced.

As illustrated in Figures 4 to 7e, when retracting the landing gear assembly 30 upon extension of the actuator piston 70, the bellcrank linkage 60 is rotated about its pivot point 63 and the second end 64 of the bellcrank linkage 60 pulls the primary strut 90 and the wheel 100 upwards and aftwards, with the pulling force being applied through the secondary strut or shock absorber 80. Conversely, when lowering the landing gear assembly 30 into its deployed configuration upon retraction of the actuator piston 70, the bellcrank linkage 60 is rotated (in the opposite sense) about its pivot point 63 and the second end 64 of the bellcrank linkage 60 lowers the primary strut 90 and the wheel 100, again by means of the secondary strut or shock absorber 80.

The shock absorber 80 may be configured to "fail long", i.e. to remain extended in the event it loses oil or pressure. This enables the shock absorber 80 to continue to act as the component via which the primary strut 90 and wheel 100 are raised or lowered, despite the shock absorber 80 having become faulty. Accordingly the landing gear assembly 30 remains retractable or deployable, to enable safe (albeit not fully cushioned) takeoff and landing operations to still be carried out.

Optionally the second end 83 of the secondary strut 80 may be pivotally coupled to the pivot point 94 on the primary strut 90 by means of a fuse pin that is configured to fail in a controlled manner in the event of an extraordinarily hard landing or crash landing.

Alternatively, or in addition, the pivotable joint at FA3, by means of which the primary strut 90 is pivotally coupled to the second ends 43, 53 of the forward brace 40 and the aft brace, may also incorporate a fuse pin, again configured to fail in a controlled manner in the event of an extraordinarily hard landing or crash landing.

### Lock links 76, 78

To provide further bracing and to direct the load path of the shock absorber 80 as it compresses during landing and ground manoeuvres, preferably the landing gear assembly 30 further comprises the first lock link 76 and the second lock link 78. The first and second lock links 76, 78 are configured to adopt a locked or bracing configuration when the landing gear assembly 30 is in the deployed configuration, as shown in Figures 2 and 3.

In more detail, the first lock link 76 has a first end and a second end, and the second lock link 78 also has a first end and a second end. The first end of the first lock link 76 is pivotally coupled to the second end 43 of the forward brace 40, the second end 53 of the aft brace 50, and the first end 91 of the primary strut 90. The second end of the first lock link 76 is pivotally coupled to the first end of the second lock link 78. The second end of the second lock link 78 is pivotally coupled to the second end 64 of the bellcrank linkage 60 and the first end 81 of the secondary strut 80, between the clevis parts 64a, 64b.

In the illustrated example, the first lock link 76 is longer than the second lock link 78. In particular, the length of the first lock link 76 is around two to three times the length of the second lock link 78.

Further, in the illustrated example, the first end of the first lock link 76 is pivotally mounted about the common fixed axis FA3 with the first end 91 of the primary strut 90, and also the fixed second end 43 of the forward brace 40, and the fixed second end 53 of the aft brace 50.

As well as adopting a locked configuration to brace the landing gear assembly 30 when in the deployed configuration (as in Figures 2 and 3), the first and second lock links 76, 78 may also be configured to adopt a locked configuration when the landing gear assembly 30 is fully retracted. This is not shown in Figures 4 and 5, but is a modification of the configuration shown in Figures 4 and 5. In other words, the first and second lock links 76, 78 may act as a so-called "reinstating link" that readopts a locking configuration as the landing gear assembly 30 adopts its retracted configuration.

The first and second lock links 76, 78 may be provided with one or more actuators (not illustrated) to pull the lock links 76, 78 out of the linear locked configuration of Figure 3 (and thereby take away their bracing function) when beginning retraction of the landing gear assembly 30.

Similarly, in the event that the first and second lock links 76, 78 are also configured to adopt a locked configuration when the landing gear assembly 30 is in the retracted configuration, one or more actuators many again be provided to pull the lock links 76, 78 out of this locked configuration when beginning extension of the landing gear assembly 30.

### Landing gear bay 120

The landing gear assembly 30 is extendable from, and retractable into, a corresponding gear bay of the aircraft. Figures 3 and 5 schematically indicate regions 110 of the wing or body structure, between which the opening 112 of the gear bay 120 is defined. It will be appreciated that this opening 112 may typically be closed by gear bay doors (not shown) when the landing gear assembly 30 is retracted therein, during flight. Figure 5 also schematically indicates the internal walls 114, 116 of the gear bay 120, which separate the gear bay 120 from the passenger-, cargo- or fuel-carrying regions of the aircraft, for example. (These walls 114, 116 have been omitted from Figure 3.) It will be appreciated from Figure 5 that the overall size and configuration of the gear bay 120 is compact, and therefore well suited to incorporation in the wing/body structure of a BWB aircraft, for example - for example to house the main landing gear in the tapered aft section of such an aircraft.

As shown by the arrow R in Figure 5, the primary strut 90 pivots about the fixed axis FA3 when the landing gear assembly 30 transitions from the deployed configuration of Figure 3 to the retracted configuration of Figure 5. Since the length L of the gear bay opening 112 between the regions 110 of the wing or body structure of the aircraft is determined by the length of the primary strut 90 and the radius of the wheel 100, and not by the lengths of any of the other struts that make up the landing gear assembly 30, length L can be made optimally short through making the primary strut 90 no longer than necessary.

### Operational kinematics

Figures 6a to 6e (and likewise Figures 7a to 7e) sequentially show the manner of operation of the landing gear assembly 30 when transitioning from its deployed configuration (as in Figure 6a) to its retracted configuration (as in Figure 6e). To begin with, it may be noted from Figure 6a that, when the landing gear assembly 30 is in its deployed configuration, the actuator piston 70 is fully retracted and in a substantially horizontal orientation on the page. It will of course be appreciated that, during operation, the actual orientation of the actuator piston 70 and the other movable components will depend on the pitch of the aircraft at any particular time, but for the purpose of the present explanation it is instructive to consider the orientation of the actuator piston 70 and the other movable components as shown on the page, and to observe their angular changes relative to the initial configuration shown in Figure 6a. Also in Figure 6a, it may be noted that the bellcrank linkage 60 is oriented such that its first end 62 is slightly raised from the horizontal and its second end 64 is angled steeply downward, the shock absorber 80 is substantially vertical, and the primary strut 90 is at an angle of approximately 45° from the horizontal. The first and second lock links 76, 78 are locked in a straight line to provide bracing to the shock absorber 80.

As shown in Figure 6b, upon a small initial amount of extension of the actuator piston 70 in direction E, the bellcrank linkage 60 is rotated about its pivot point 63 and the fixed axis FA2. More particularly, the first end 62 of the bellcrank linkage 60 is pushed upwards by the actuator piston 70, to an angle approaching the vertical, and the second end 64 of the bellcrank linkage 60 is brought inwards towards the aft brace 50. This has the effect of pulling the shock absorber 80 inwards, towards the primary strut 90, bringing the first and second lock links 76, 78 out of linear alignment (i.e. such that they no longer perform a locked or bracing function), and also beginning to raise the primary strut 90 about the axis FA3. It may also be noted that the first end of the actuator piston 70 has rotated upwards slightly, about the fixed axis FA1.

With reference now to Figure 6c, upon further extension of the actuator piston 70 in direction E, the bellcrank linkage 60 is further rotated about its pivot point 63 and the fixed axis FA2. More particularly, the first end 62 of the bellcrank linkage 60 is pushed further upwards by the actuator piston 70, now to a substantially vertical angle, and the second end 64 of the bellcrank linkage 60 is brought further inwards such that it is now beginning to pass inwards of the aft brace 50. That is to say, the second end 64 of the bellcrank linkage 60 is now beginning to pass into the region between the forward brace 40 and the aft brace 50. This has the effect of pulling the shock absorber 80 further inwards, and raising the primary strut 90 further about the axis FA3. Moreover, the first end of the actuator piston 70 has rotated further upwards, about the fixed axis FA1.

Turning now to Figure 6d, upon further extension of the actuator piston 70 in direction E, the bellcrank linkage 60 is further rotated about its pivot point 63 and the fixed axis FA2. The first end 62 of the bellcrank linkage 60 is now at an angle beyond the vertical, and the second end 64 of the bellcrank linkage 60 has been brought further inwards such that it is now entirely inwards of the aft brace 50. That is to say, the second end 64 of the bellcrank linkage 60 is now fully in the region between the forward brace 40 and the aft brace 50. This has the effect of pulling the shock absorber 80 yet further inwards, and raising the primary strut 90 further about the axis FA3, into a substantially horizontal orientation. It may also be noted that the first end of the actuator piston 70 has now begun to rotate downwards about the fixed axis FA1.

Notably, when transitioning from the configuration shown in Figure 6c to that of Figure 6d, the first end 62 of the bellcrank linkage 60 rotates about the pivot point 63 of the bellcrank linkage 60 in an over-centred manner. This is accompanied by the first end of the actuator piston 70 changing from rotating upwards about the fixed axis FA1, to rotating downwards. Such over-centring may advantageously help to hold the landing gear assembly 30 in either the retracted configuration or the deployed configuration (whichever configuration it is currently in) the event of failure of the actuator piston 70.

Finally, upon reaching the configuration shown in Figure 6e (corresponding to full retraction of the landing gear assembly 30 into the gear bay), the actuator piston 70 has maximally extended in direction E, and the bellcrank linkage 60 has further rotated about its pivot point 63 and the fixed axis FA2. The first end 62 of the bellcrank linkage 60 is now at an angle further beyond the vertical, and the second end 64 of the bellcrank linkage 60 has been brought further inwards of the aft brace 50, such that it is now adjacent to the actuator piston 70. The shock absorber 80 has been pulled maximally inwards, and the primary strut 90 has been raised further about the axis FA3, now to above the horizontal, into a fully retracted state. It may also be noted that the first end of the actuator piston 70 has now rotated further downwards about the fixed axis FA1, such that it is now substantially horizontal. The first and second lock links 76, 78 remain unlocked, but in an alternative example the first and second lock links 76, 78 could readopt a locked configuration at this point, if they are configured to provide a "reinstating link".

A guide mechanism (such as guide rollers) may be provided within the gear bay, to guide the landing gear assembly 30 into the retracted configuration of Figure 6e during retraction.

It will be appreciated that transitioning of the landing gear assembly 30 from the retracted configuration to the deployed configuration is achieved by reversing the sequence described above, i.e. by transitioning from the configuration of Figure 6e to that of Figure 6a (and likewise from Figure 7e to 7a) whilst progressively retracting the actuator piston 70.

### Summary

As illustrated, the present disclosure provides a landing gear assembly 30 in which the top end 81 of the shock absorber 80 is attached to the second end 64 of the large bellcrank type linkage 60 that has a fixed pivot 63 connected to the airframe at the same interface (FA2) as the aft gear brace 50. The first end 62 of the bellcrank linkage 60 is connected to the retraction actuator 70 at the interface (FA1) of the forward gear brace 40 with the airframe. As the actuator 70 extends in length (using hydraulic or electrical power) the landing gear (primary strut 90 and wheel(s) 100) is pulled upwards about axis FA3 and aft into the landing gear bay 120. Beneficially the stowed length of the landing gear is shortened. The set of lock links 76, 78 add further bracing and direct the load path of the shock absorber 80 as it compresses during landing and ground manoeuvres.

The kinematic geometry of this solution is such that the landing gear reduces in length as it retracts aftwards into the gear bay area. This results in a shorter gear bay length requirement with considerable benefit to the aircraft. This is particularly relevant (but not limited) to BWB aircraft due to the tapering of the fuselage at the aft section of these aircraft types.

### Modifications and alternatives

Detailed embodiments and some possible alternatives have been described above. As those skilled in the art will appreciate, a number of modifications and further alternatives can be made to the above embodiments whilst still benefiting from the inventions embodied therein.

## Claims

1. A landing gear assembly for an aircraft, the landing gear assembly comprising:
a forward brace having a first end for attachment to an airframe of the aircraft, and a second end;
an aft brace having a first end for attachment to the airframe of the aircraft, and a second end, wherein the second end of the aft brace is coupled to the second end of the forward brace;
an actuator piston having a first end and a second end, wherein the first end of the actuator piston is pivotally coupled to the first end of the forward brace;
a bellcrank linkage having a first end, a second end, and a pivot point between the first end and the second end, such that a first portion of the bellcrank linkage extends from the first end to the pivot point, and a second portion of the bellcrank linkage extends from the pivot point to the second end, wherein the pivot point of the bellcrank linkage is pivotally coupled to the first end of the aft brace, and wherein the first end of the bellcrank linkage is pivotally coupled to the second end of the actuator piston;
a primary strut having a first end and a second end, wherein the first end of the primary strut is pivotally coupled to the second end of the forward brace and the second end of the aft brace, and wherein one or more wheels of the aircraft are mounted at the second end of the primary strut; and
a secondary strut having a first end and a second end, wherein the first end of the secondary strut is pivotally coupled to the second end of the bellcrank linkage, and wherein the second end of the secondary strut is pivotally coupled to a pivot point near to the second end of the primary strut;
wherein the landing gear assembly is configured to adopt a deployed configuration when the actuator piston is in a retracted configuration, and wherein the landing gear assembly is configured to adopt a retracted configuration when the actuator piston is in an extended configuration.

2. The landing gear assembly according to claim 1, wherein the first end of the actuator piston is pivotally mounted about a common axis with the first end of the forward brace; and/or
wherein the pivot point of the bellcrank linkage is pivotally mounted about a common axis with the first end of the aft brace.

3. The landing gear assembly according to claim 1 or claim 2, wherein the first end of the primary strut is pivotally mounted about a common axis with the second end of the forward brace and the second end of the aft brace.

4. The landing gear assembly according to any preceding claim, wherein the second portion of the bellcrank linkage is at an obtuse angle relative to the first portion of the bellcrank linkage;
optionally wherein the obtuse angle is approximately 140°.

5. The landing gear assembly according to any preceding claim, wherein the second portion of the bellcrank linkage is longer than the first portion of the bellcrank linkage;
optionally wherein the second portion of the bellcrank linkage is approximately twice the length of the first portion of the bellcrank linkage.

6. The landing gear assembly according to any preceding claim, wherein the second end of the bellcrank linkage is in the form of a clevis in which the first end of the secondary strut is pivotally coupled.

7. The landing gear assembly according to any preceding claim, wherein the forward brace comprises a first forward bracing strut and a second forward bracing strut, each having a first end and a second end, wherein the first end of the first forward bracing strut and the first end of the second forward bracing strut form the first end of the forward brace, and wherein the second end of the first forward bracing strut and the second end of the second forward bracing strut form the second end of the forward brace.

8. The landing gear assembly according to any preceding claim, wherein the aft brace comprises a first aft bracing strut and a second aft bracing strut, each having a first end and a second end, wherein the first end of the first aft bracing strut and the first end of the second aft bracing strut form the first end of the aft brace, and wherein the second end of the first aft bracing strut and the second end of the second aft bracing strut form the second end of the aft brace.

9. The landing gear assembly according to any preceding claim, further comprising a first lock link and a second lock link, each having a first end and a second end, wherein the first end of the first lock link is pivotally coupled to the second end of the forward brace, the second end of the aft brace, and the first end of the primary strut;
wherein the second end of the first lock link is pivotally coupled to the first end of the second lock link;
wherein the second end of the second lock link is pivotally coupled to the second end of the bellcrank linkage and the first end of the secondary strut; and
wherein the first and second lock links are configured to adopt a bracing configuration when the landing gear assembly is in the deployed configuration;
optionally wherein the first lock link is longer than the second lock link;
optionally wherein the length of the first lock link is around two to three times the length of the second lock link.

10. The landing gear assembly according to claim 9 when dependent on claim 3, wherein the first end of the first lock link is pivotally mounted about the common axis with the first end of the primary strut, the second end of the forward brace and the second end of the aft brace.

11. The landing gear assembly according to claim 9 or claim 10, wherein the first and second lock links are further configured to adopt a locked configuration when the landing gear assembly is in the retracted configuration.

12. The landing gear assembly according to any preceding claim, wherein the secondary strut comprises a shock absorber;
optionally wherein the shock absorber is configured to adopt an extended configuration in the event it loses oil or pressure.

13. The landing gear assembly according to any preceding claim, wherein the second end of the secondary strut is pivotally coupled to the pivot point near to the second end of the primary strut by means of a fuse pin.

14. The landing gear assembly according to any preceding claim, wherein, when transitioning from the deployed configuration to the retracted configuration, the second end of the bellcrank linkage is configured to pass into a region between the forward brace and the aft brace; and/or
wherein, when transitioning from the deployed configuration to the retracted configuration, the first end of the bellcrank linkage is configured to rotate about the pivot point of the bellcrank linkage in an over-centred manner.

15. An aircraft comprising:
the landing gear assembly according to any preceding claim; and
a landing gear bay;
wherein the landing gear assembly is retractable into the landing gear bay when transitioning from the deployed configuration to the retracted configuration;
optionally wherein the aircraft is a blended wing body aircraft.
